# EUROPÄISCHE PATENTANMELDUNG

(11) **EP 2 378 216 A2**
(43) Veröffentlichungstag der Anmeldung: **19.10.2011**
(21) Anmeldenummer: 11003118.4
(22) Anmeldetag: 13.04.2011
(51) Int. Cl.: F24F 12/00, F24F 13/068

(54) **Lüftungseinrichtung**

(30) Priorität: 13.04.2010 DE 102010014872
(71) Anmelder: Grohmann, Erwin, 74656 Künzelsau (DE); Lechner, Thomas, 67434 Neustadt a.d. Weinstrasse (DE); Schreiber, Wolfgang, 65474 Bischofsheim (DE)
(72) Erfinder: Grohmann, Erwin, 74656 Künzelsau (DE); Lechner, Thomas, 67434 Neustadt a.d. Weinstrasse (DE); Schreiber, Wolfgang, 65474 Bischofsheim (DE)
(74) Vertreter: LOUIS, PÖHLAU, LOHRENTZ

(57) **Zusammenfassung**

Es wird eine Lüftungseinrichtung (10) insbesondere für Räume öffentlicher Gebäude, wie Klassenzimmer, Kindergärten, Büros o. dgl. beschrieben, die einen Lüftungskanal (14) aufweist, der einen Abluftraum (16) für verbrauchte warme Raumluft (26) und einen Zuluftraum (18) für frische, zu erwärmende Zuluft aufweist, wobei der Abluftraum (16) vom Zuluftraum (18) durch eine Wärmetauscher-Trennwand (20) getrennt ist. Zur Erzeugung einer Zwangsluftströmung ist der Lüftungskanal (14) mit einem Lüftungsgerät (44) strömungstechnisch verbindbar oder verbunden, das Ventilatoren und einen Hochleistungs-Wärmetauscher (46) aufweist, und das von außerhalb des Raumes (12) zugänglich ist.

## Beschreibung

Die Erfindung betrifft eine Lüftungseinrichtung insbesondere für Räume öffentlicher Gebäude, wie Klassenzimmer, Kindergartenräume, Büros o. dgl.

Seit dem Jahr 2008 ist eine neue Energieeinsparverordnung (=EnEV) sowie die Umsetzung der EPBD (=Europäische Energieeffizienz-Richtlinie) gesetzlich vorgeschrieben. Das bedeutet, dass Gebäude-Nachbauten sowie Modernisierungs- und Sanierungsgebäude, die dem Niedrigenergie-Standard entsprechen, energieoptimiert ausgeführt sein müssen. Das gilt sowohl für Wohngebäude als auch für öffentliche Gebäude wie bspw. Klassenzimmer, Kindergartenräume, Büros oder andere Räume bzw. Nutzungseinheiten.

Um die EnEV und die EPBD zu erfüllen, muß die Gebäudehülle dicht sein, um den Energieverbrauch entsprechend zu senken. Infolge der dichten Gebäudehülle ist jedoch kein natürlicher Luftwechsel gegeben, so dass die Luftfeuchtigkeit durch Atmung, Arbeits- und Wasch-Tätigkeiten, Kochen sowie durch die im Gebäude oftmals vorhandenen Zimmerpflanzen zu einem unerwünschten Schimmelpilz-Befall führt und die Qualität der Raumluft verschlechtert wird. Hierdurch wird nicht nur das Raumklima verschlechtert sondern auch die Bausubstanz beeinträchtigt. Außerdem sinkt der lebenswichtige Sauerstoffgehalt der Atemluft. Das kann zu Konzentrationsschwächen, zu Übelkeit sowie zu diversen Krankheiten führen.

Zur Vermeidung aller dieser Probleme und Mängel ist eine kontrollierte Lüftung erforderlich.

Insbesondere für Niedrigenergiehäuser, wie Einfamilienhäuser, beschreibt die DE 102 49 562 A1 (E. Grohmann) ein Lüftungsgerät mit einem Wärmetauscher, der strömungstechnisch mit einem Abluftanschluss und einem Fortluftanschluss, sowie mit einem Außenluftanschluss und einem Zuluftanschluss verbunden ist. Dieses bekannte Lüftungsgerät ist zur Montage an oder in einer Hauswand, von außen zugänglich, vorgesehen, so dass es keinen eigenen Wohnraumbedarf besitzt und gereinigt bzw. gewartet werden kann, ohne im Haus Verschmutzungen zu verursachen. Dieses bekannte Lüftungsgerät weist eine Außenluftansaugöffnung und einen Einströmanschluss sowie einen Ausströmanschluss für ein in der Erde verlegtes Rohr auf. Die Außenluftansaugöffnung ist mit dem Einströmanschluss und der Ausströmanschluss ist über den Wärmetauscher mit dem Zuluftanschluss strömungstechnisch verbunden. Zwischen dem Wärmetauscher und dem Zuluftanschluss ist vorzugsweise ein Zuluftventilator und zwischen dem Wärmetauscher und dem Fortluftanschluss ist vorzugsweise ein Abluftventilator vorgesehen. Zwischen dem Wärmetauscher und dem Zuluftanschluss kann außerdem eine Nachheizeinrichtung vorgesehen sein. Diese kann von einem Elektro- oder einem Warmwasser-Nachheizregister gebildet sein. Dem Abluftanschluss dieses bekannten Lüftungsgerätes kann ein Abluftfilter und dem Ausströmanschluss kann ein Ausströmfilter zugeordnet sein.

Mit dem Zuluftanschluss dieses bekannten Lüftungsgerätes ist eine Zuluft-Lüftungsleitung und mit dem Abluftanschluss ist eine Abluft-Lüftungsleitung verbunden. Diese Lüftungsleitungen sind bspw. Im Dachspitz, d.h. unmittelbar unter dem Dachfirst, oder im Drempel, d.h. hinter dem Kniestock, verlegt und zu den einzelnen Gebäude-Etagen bzw. Räumen des Niedrigenergiehauses geführt. Das bedingt einen entsprechenden Installations- und Material-Aufwand.

Der Erfindung liegt die Aufgabe zugrunde, eine Lüftungseinrichtung der eingangs genannten Art zu schaffen, die insbesondere für die Nachrüstung von Räumen öffentlicher Gebäude, wie Klassenzimmer, Kindergärten, Büros und andere Räume bzw. Nutzungseinheiten vorgesehen ist.

Diese Aufgabe wird erfindungsgemäß durch die Merkmale des Anspruches 1, d. h. durch eine Lüftungseinrichtung mit einem Lüftungskanal gelöst, der einen Abluftraum für verbrauchte warme Raumluft und einen Zuluftraum für frische Zuluft aufweist, wobei vorgesehen ist,
a) dass der Abluftraum zum Zuluftraum durch eine Wärmetauscher-Trennwand getrennt ist und/oder
b) dass zumindest eine Außenwand des Lüftungskanals zumindest abschnittsweise aus Nichtmetall-Material ausgebildet ist und/oder
c) dass der Lüftungskanal an der Unterseite einen doppelten Boden aufweist zur Verlegung von Leitungen und/oder
d) dass der Lüftungskanal eine abnehmbare oder öffenbare Außenwand zu Reinigungszwecken des Innenraums des Lüftungskanals aufweist.

Was Merkmal a) betrifft, welches vorsieht, dass der Abluftraum zum Zuluftraum durch eine Wärmetauscher-Trennwand getrennt ist, kann bei bevorzugten Ausführungen vorgesehen sein, dass die Wärmetauscher-Trennwand aus einem hoch wärmeleitfähigen Metallmaterial oder aus einem entsprechenden Kunststoffmaterial ausgebildet ist. Wesentlich ist, dass die Trennwand als Wärmetauscher-Trennwand ausgebildet ist, das heißt als Trennwand, die einen hohen Wärmestrom und/oder eine hohe Wärmeübertragung zwischen der im Abluftraum geführten warmen Raumluft und der im Zuluftraum geführten frischen Zuluft ermöglicht. Der Wärmestrom beschreibt die Wärmeleitung, die von der Raumluft in die Zuluft erfolgt, wenn die Raumluft wärmer als die Zuluft ist. Der Wärmestrom ist um so höher, je größer die Fläche der Wärmetauscher-Trennwand und die Temperaturdifferenz zwischen der Raumluft und der Zuluft ist, und je geringer die Dicke der Wärmetauscher-Trennwand ist. Der Wärmestrom soll so groß sein, dass eine Erwärmung der Zuluft erreicht wird, die gleichzeitig mit der Belüftung des Raums eine angenehme Temperierung des Raums möglich macht.

Um dieses Ziel eines hohen Wärmestromes zu erreichen, kann bei bevorzugten Ausführungen vorgesehen sein, dass die Wärmetauscher-Trennwand aus einer Silizium-Aluminium-Legierung oder einem Metallmaterial vergleichbarer spezifischer Wärmeleitfähigkeit ausgebildet ist, wobei die Wärmetauscher-Trennwand mit einer Wanddicke ausgebildet ist, die den gewünschten Wärmestrom ermöglicht.

Die Wärmetauscher-Trennwand kann aber auch aus Polycarbonat oder einem Kunststoffmaterial vergleichbarer spezifischer Wärmeleitfähigkeit ausgebildet sein, wobei auch in diesem Fall die Wärmetauscher-Trennwand mit einer Wanddicke ausgebildet ist, die den gewünschten Wärmestrom ergibt, wobei wegen der geringeren spezifischen Wärmeleitfähigkeit des Kunststoffmaterials gegenüber metallischem Material trotz verringerter Wanddicke mit einem vergleichsweise geringeren Wärmestrom zu rechnen ist.

Zur Kompensation des vorgenannten Effekts sind auch Ausführungen möglich, bei denen besondere konstruktive Gestaltungen der Wärmetauscher-Trennwand vorgesehen sind, mit denen ein hoher Wärmestrom erhalten wird. Bei solchen Ausführungen kann z. B. vorgesehen sein, dass die Wärmetauscher-Trennwand eine gerippte Struktur aufweist, wobei die Fläche der Wärmetauscher-Trennwand vergrößert wird.

Kunststoffmaterialien, wie Polycarbonat, erlauben wegen ihrer hohen Duktilität, die Wärmetauscher-Trennwand mit relativ geringer Wandstärke auszubilden, ohne dass in der Wärmetauscher-Trennwand Risse auftreten. Aus Metallmaterial ausgebildete Wärmetauscher-Trennwände sind in der Regel mit größerer Wanddicke auszubilden, um Risse zu vermeiden. Dies bedeutet, dass aus Kunststoffmaterial ausgebildete Trennwände relativ geringe Wandstärke und damit auch den gewünschten Wärmestrom aufweisen können.

Bei besonders bevorzugten Ausführungen sind das für die Wärmetauscher-Trennwand vorgesehene Material und/oder die Dicke der Wärmetauscher-Trennwand und/oder die Form der Wärmetauscher-Trennwand so ausgebildet, dass eine thermische Wärmebereitstellung von mindestens 90 % gegeben ist. Die thermische Wärmebereitstellung von Lüftungsgeräten, zu denen auch die Lüftungseinrichtung nach Merkmal a) zählt, ist nach den Prüfkriterien gemäß DiBt und Passivhaus definiert.

Was Merkmal b) des Patentanspruchs 1 betrifft, welches vorsieht, dass zumindest eine Außenwand des Lüftungskanals zumindest abschnittsweise aus Nichtmetall-Material ausgebildet ist, kann bei bevorzugten Ausführungen vorgesehen sein, dass die betreffende Außenwand zumindest abschnittsweise aus Holz oder aus Holzersatzstoffen ausgebildet ist. Bei besonders bevorzugten Ausführungen sind mehrere Außenwände des Lüftungskanals aus Nichtmetall-Material, vorzugsweise Holz oder Holzersatzstoffe ausgebildet. Der gesamte Lüftungskanal kann als Holzkonstruktion ausgebildet sein, d.h. als Kanal mit Außenwänden, die aus Holz oder Holzersatzstoffen ausgebildet sind. Unter Außenwänden werden die tragenden Wände des Kanals verstanden. Sie können dabei an ihrer Außenseite und an ihrer Innenseite durchaus beschichtet oder mit einer zusätzlichen Außen- oder Innenschale aus anderem Material, vorzugsweise Metall- oder Kunststoffmaterial versehen sein. Bei besonders bevorzugten Ausführungen ist der Lüftungskanal jedoch eine primär aus Holz oder Holzersatzstoffen ausgebildete Konstruktion, bei der sämtliche Außenwände aus Holz oder Holzersatzstoffmaterial ausgebildet sind. Bei besonders bevorzugten Ausführungen ist lediglich die in dem Lüftungskanal angeordnete Trennwand als Wärmetauscher-Trennwand gemäß Merkmal a) des Patentanspruchs 1 ausgebildet. Es sind jedoch auch Ausführungen möglich, bei denen der Lüftungskanal gemäß Merkmal b) ausgebildet ist, d.h. zumindest eine Außenwand des Lüftungskanals zumindest abschnittsweise aus Nichtmetall-Material ausgebildet ist, und die Trennwand z.B. aus dem gleichen Nichtmetall-Material ausgebildet ist. Besondere Vorteile ergeben sich jedoch mit Ausführungen, bei denen die Merkmale a) und b) des Patentanspruchs 1 in Kombination realisiert sind.

Insbesondere in solchen Fällen kann der Lüftungskanal als Energielüftungskanal ausgebildet sein. Energielüftungskanal bedeutet, dass in dem Lüftungskanal mindestens ein Luftstrom geführt ist und dabei Wärme transportiert wird und/oder Wärme zwischen mehreren in dem Lüftungskanal geführten Luftströmen ausgetauscht wird und/oder Energieversorgungsleitungen für elektrischen Strom und/oder Heizmedien und/oder Kühlmedien und/oder hydraulisches Medium und/oder pneumatisches Medium angeordnet sind.

Was Merkmal c) des Patentanspruchs 1 betrifft, wonach vorgesehen ist, dass der Lüftungskanal an der Unterseite einen doppelten Boden aufweist zur Verlegung von Leitungen, kann bei bevorzugten Ausführungen vorgesehen sein, dass es sich bei den Leitungen um elektrische Versorgungsleitungen handelt. Es wird damit auf sehr praktikable Weise eine verdeckte Führung der elektrischen Versorgungsleitungen möglich. Es sind jedoch auch bevorzugte Ausführungen vorgesehen, bei denen in dem doppelten Boden andere Leitungen als elektrische Versorgungsleitungen verlegt werden, z.B. ein Medium führende Leitungen, insbesondere Heiz- oder Kühlmedium führende Leitungen. Es kann sich aber auch um lediglich zur Ölversorgung oder Gasversorgung vorgesehene Öl- bzw. Gasleitungen handeln, die in den doppelten Boden untergebracht werden, d.h. gegebenenfalls primär im Sinne einer optisch verdeckten Montage.

Was Merkmal d) des Patentanspruchs 1 betrifft, welches vorsieht, dass der Lüftungskanal eine abnehmbare oder öffenbare Außenwand zu Reinigungszwecken des Innenraums des Lüftungskanals aufweist, kann bei besonders bevorzugten Ausführungen vorgesehen sein, dass die abnehmbare Außenwand des Lüftungskanals als Metallelement, z.B. metallische Schürze ausgebildet ist, welches magnetisch an einem Teil des Lüftungskanals lösbar befestigt ist. Es kann bei Weiterbildungen vorgesehen sein, dass die magnetische Befestigung des Metallelements, z.B. der metallischen Schürze über eine an dem Lüftungskanal angebrachte Permanentmagnet-Einrichtung erfolgt.

Der Lüftungskanal ist in dem jeweiligen, zu belüftenden Raum einfach montierbar. Diese Montage kann bspw. Mit Hilfe von Befestigungsbügeln erfolgen, um den Lüftungskanal von der Raumdecke abgehängt, d.h. definiert beabstandet, zu befestigen. Eine andere Möglichkeit besteht z.B. darin, den Lüftungskanal direkt und unmittelbar an der Unterseite der Raumdecke, d.h. deckenbündig, zu befestigen.

Die den Abluftraum und den Zuluftraum voneinander trennende Wärmetauscher-Trennwand kann zu ihrer Oberflächenvergrößerung und somit zur Optimierung des Wärmetausches mit voneinander beabstandeten Wärmetauscherrippen versehen sein.

Als vorteilhaft hat es sich erwiesen, wenn der Lüftungskanal einen länglichen oder quadratischen Querschnitt besitzt, und wenn die Wärmetauscher-Trennwand, zum Boden und zur Oberseite des Lüftungskanales parallel orientiert, den Querschnitt des Lüftungskanales in den Abluftraum und den Zuluftraum unterteilt. Der Lüftungskanal kann aber auch einen kreisförmigen oder anders abgerundeten Querschnitt aufweisen. Im Falle eines länglichen Querschnitts kann dieser rechteckig, oval oder auch trapezförmig oder anderweitig polygonal ausgebildet sein. Im Falle eines länglichen rechteckigen Querschnitts kann der Lüftungskanal beispielsweis Querschnitts-Abmessungen von 800 mm x 120 mm und eine Länge von 2 m besitzen, wobei es sich versteht, dass auch andere Abmessungen möglich sind. Im Bedarfsfall können solche Lüftungskanal-Elemente mit Hilfe von Verbindungsmuffen miteinander strömungstechnisch verbunden werden. Damit sich die besagten Verbindungsmuffen nach außen hin nicht störend bemerkbar machen, kann es zweckmäßig sein, diese innenliegend vorzusehen.

Bevorzugt ist es, wenn der Lüftungskanal an seinem Boden mit Löchern für die verbrauchte, warme Raumluft und an einer Längsschmalseite mit Löchern für die erwärmte Zuluft ausgebildet ist. Bei der Längsschmalseite kann es sich bspw. Um die Längsstirnseite des Lüftungskanales handeln.

Bevorzugt ist es des Weiteren, wenn der Lüftungskanal mit einer Wärmeisolation versehen ist. Desgleichen kann es vorteilhaft sein, wenn der Lüftungskanal mit einer Schallisolation versehen ist, um die Raumschall-Eigenschaften durch den Lüftungskanal nicht negativ zu beeinflussen.

Um nicht nur akustischen Anforderungen zu genügen, kann es zweckmäßig sein, den Lüftungskanal mit einer Beleuchtungseinrichtung zu versehen. Die Beleuchtungseinrichtung ist zweckmäßigerweise an der Unterseite des Bodens des Lüftungskanales vorgesehen. Sie kann eine Anzahl Lichtquellen aufweisen, die von Niedrigenergielampen gebildet sein können.

Erfindungsgemäß ist der Lüftungskanal vorzugsweise mit einem Lüftungsgerät strömungstechnisch verbindbar oder verbunden, das einen Hochleistungs-Wärmetauscher aufweist. Bei diesem Lüftungsgerät kann es sich um ein Lüftungsgerät handeln, wie es in der eingangs zitierten DE 102 49 562 A1 beschrieben worden ist, deren Inhalt insofern zum Offenbarungsgehalt der vorliegenden Erfindung gehört.

Besonders vorteilhaft ist es hierbei, wenn das Lüftungsgerät von außerhalb des zu belüftenden Raumes zugänglich ist, um Reinigungs- und/oder Wartungsarbeiten von außerhalb des Raumes vornehmen zu können.

Bevorzugt ist es, wenn das Lüftungsgerät eine integrierte Regelung aufweist. Bei einer derartigen Ausbildung kann das Lüftungsgerät bspw. Auch von einer Haustechnik-Zentrale gesteuert und überwacht werden, so dass unerwünschte Manipulationen ausgeschlossen werden können.

Zweckmäßig kann es sein, wenn der Hochleistungs-Wärmetauscher des mit dem Lüftungskanal strömungstechnisch verbundenen Lüftungsgerätes ein Vorheizregister aufweist.

Das erfindungsgemäß realisierbare Energiekonzept mit dem Lüftungsgerät mit hocheffizientem Wärmetauscher für die Wärmerückgewinnung und dem Lüftungskanal weist den Vorteil auf, dass der mit dem Lüftungskanal versehene Raum optimal mit frischer, erwärmter Luft versorgt werden kann. Dabei wird dem Raum die warme, verbrauchte Luft mit einem energiesparenden Ventilator entzogen und über den Lüftungskanal zum hocheffizienten Wärmetauscher des Lüftungsgerätes geführt und nach außen geleitet. Die vergleichsweise kalte, frische Außenluft wird gefiltert über den hocheffizienten Wärmetauscher des Lüftungsgerätes und durch den Energielüftungskanal geführt - ohne sich hierbei mit der warmen verbrauchten Raumluft zu vermischen - und dann als frische, vorerwärmte Luft in den Raum eingeleitet. Auf diese Weise wird sichergestellt, dass die verbrauchte und somit gesundheitlich bedenkliche Raumluft durch frische Luft ersetzt wird. Dabei wird der durch die EnEV und weitere gesetzliche Vorgaben geforderte hygienische Grund-Luftwechsel sichergestellt.

Erfindungsgemäß ist das Lüftungsgerät - wie bereits ausgeführt worden istzur Montage an oder in einer Gebäudewand von außen zugänglich vorgesehen, wobei der Lüftungskanal Lüftungsleitungen, wie sie oben in Verbindung mit der DE 102 49 562 A1 beschrieben worden sind, entbehrlich macht. Unerheblich ist es hierbei, ob es sich bei der erwähnten Gebäudewand um eine Außenwand oder um eine Innenwand handelt. Dadurch, dass das Lüftungsgerät zur Montage an oder in einer Gebäudewand, von außerhalb des zu belüftenden Raumes zugänglich vorgesehen ist, ergibt sich der Vorteil, dass für das Lüftungsgerät im jeweiligen Gebäuderaum kein Platzbedarf besteht und die Raumkosten insofern reduziert sind. Ein erheblicher Vorteil besteht erfindungsgemäß insbesondere darin, dass die vorgeschriebenen Wartungs-und/oder Reinigungsarbeiten am Lüftungsgerät, wie bspw. Das Reinigen der Luftfilter und/oder des Wärmetauschers von einem Fachmann durchgeführt werden können, ohne dass die Gebäude-Nutzer anwesend sein müssen, weil das Lüftungsgerät von außen zugänglich ist. Infolge der von außen durchführbaren Wartungs- und/oder Reinigungsarbeiten am Lüftungsgerät sind in vorteilhafter Weise auch Verschmutzungen des jeweiligen Gebäuderaumes ausgeschlossen.

Das erfindungsgemäße Lüftungsgerät benötigt also keinen im Rauminneren zur Verfügung zu stellenden Platz. Auch eine eventuelle Reinigung von mit dem Lüftungsgerät strömungstechnisch verbundenen, relativ langen Lüftungsleitungen entfällt in vorteilhafter Weise.

Die erfindungsgemäße Lüftungseinrichtung wurde speziell für die Nachrüstung sowie den Neubau entwickelt. Mit hohem Wärmeschutz gemäß der Wärmeschutzverordnung kann mit der Erfindung im Bedarfsfall auch auf eine zusätzliche Raumheizung, wie z.B. eine Heizung mit Radiatoren, verzichtet werden. Kostspielige Arbeiten bei der Renovierung entfallen. Der Energieverbrauch des erfindungsgemäßen Konzeptes liegt bspw. Weit unter 15 kWh/m²/pa.

Bei der Erfindung handelt es sich um ein dezentrales Lüftungsgerät mit Wärmerückgewinnung, mit einem Hochleistungs-Wärmetauscher mit integrierter Regelung. Das Lüftungsgerät läuft bspw. Mit einer Grundlast von 300 m³/h und sichert auch bei einer Nichtnutzung des jeweiligen Raumes den geforderten hygienischen Grund-Luftwechsel. Unmittelbar vor einer Belegung des Raumes kann über das erfindungsgemäß vorzugsweise vorhandene Vorheizregister der Raum bspw. Auf 21°C erwärmt werden. Während der Raumbelegung wird dann durch die im Raum befindlichen Personen die warme, verbrauchte Luft über den Lüftungskanal abgesaugt und nach außen geführt. Dabei wird der Hochleistungs-Wärmetauscher mim Lüftungsgerät erwärmt. Die von außen kommende, frische kalte Außenluft wird im Hochleistungs-Wärmetauscher erwärmt, ohne sich mit der warmen, verbrauchten Raumluft zu vermischen. Die erwärmte Frischluft wird dann über den Lüftungskanal, im welchem ein weiterer zusätzlicher Wärmetausch stattfindet, dem Raum zugeführt.

Sobald sich die Luftqualität im Raum verschlechtert, regelt das Lüftungsgerät sich je nach der aktuellen Luftqualität bspw. stufenweise selbständig. Dabei können dem Raum z. B. bis zu 900 m³/h frische vorerwärmte Luft zugeführt werden.

Erfindungsgemäß kommen vorzugsweise energiesparende Gleichstrom-Ventilatoren zur Anwendung, die quasi wartungsfrei sind. Die im Lüftungsgerät befindlichen Luftfilter können bei einer Verschmutzung ersetzt oder gereinigt werden und sind danach wieder verwendbar.

Weitere Einzelheiten, Merkmale und Vorteile ergeben sich aus der nachfolgenden Beschreibung wesentlicher Einzelheiten der Erfindung in Verbindung mit den anliegenden Zeichnungen.

Es zeigen:
Fig. 1 perspektivisch schematisch einen Raum eines öffentlichen Gebäudes mit einer erfindungsgemäßen Lüftungseinrichtung,
Fig. 2 perspektivisch abschnittsweise ein wesentliches Detail der erfindungsgemäßen Lüftungseinrichtung,
Fig. 3 einen Querschnitt durch eine Ausbildung des Lüftungskanales der erfindungsgemäßen Lüftungseinrichtung,
Fig. 4 eine der Fig. 3 ähnliche Schnittansicht des mit einer Beleuchtungseinrichtung versehenen Lüftungskanales, und
Fig. 5 eine den Figuren 3 und 4 ähnliche Schnittansicht des Lüftungskanales mit einer Beleuchtungseinrichtung und einer Schallisolation.

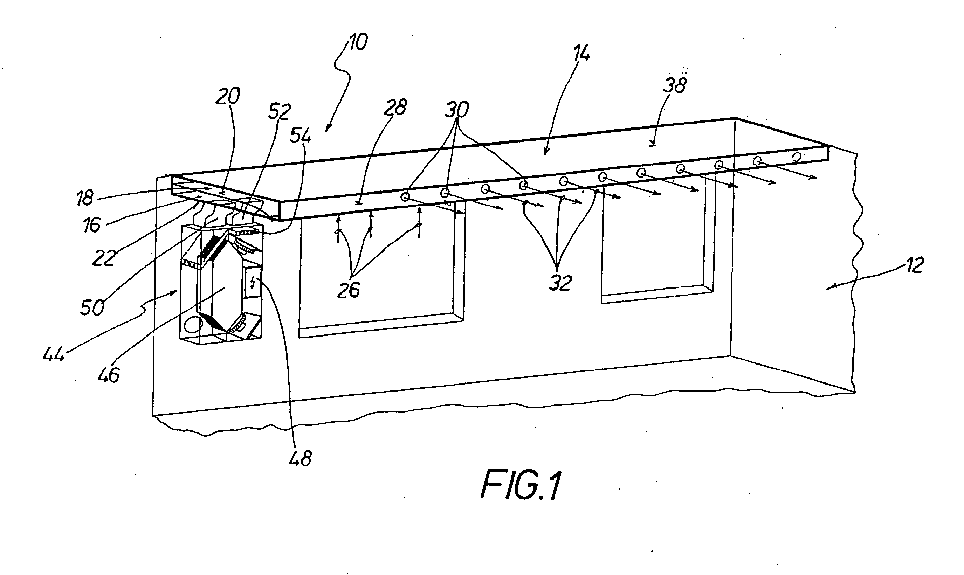

Fig. 1 zeigt eine Ausbildung der erfindungsgemäßen Lüftungseinrichtung 10 in einem abschnittsweise angedeuteten Raum 12 eines öffentlichen Gebäudes. Bei dem Raum 12 handelt es sich bspw. um ein Klassenzimmer, um einen Raum eines Kindergartens, um ein Büro o. dgl.

Die Lüftungseinrichtung 10 weist einen Lüftungskanal 14 auf, der einen Abluftraum 16 und einen Zuluftraum 18 aufweist, die durch eine Wärmetauscher-Trennwand 20 voneinander getrennt sind.

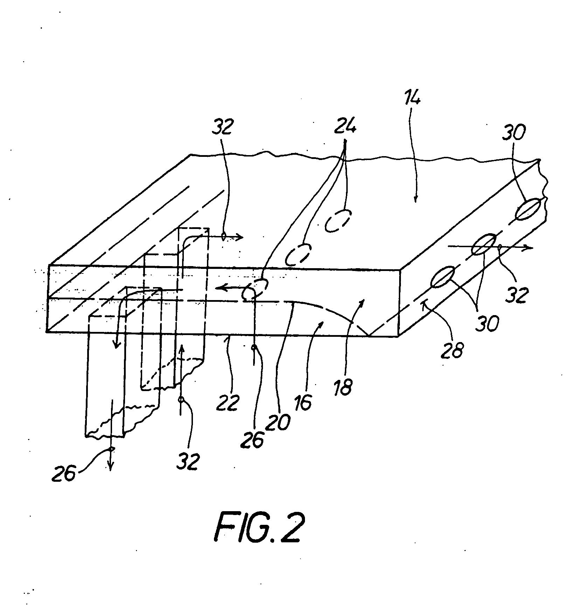

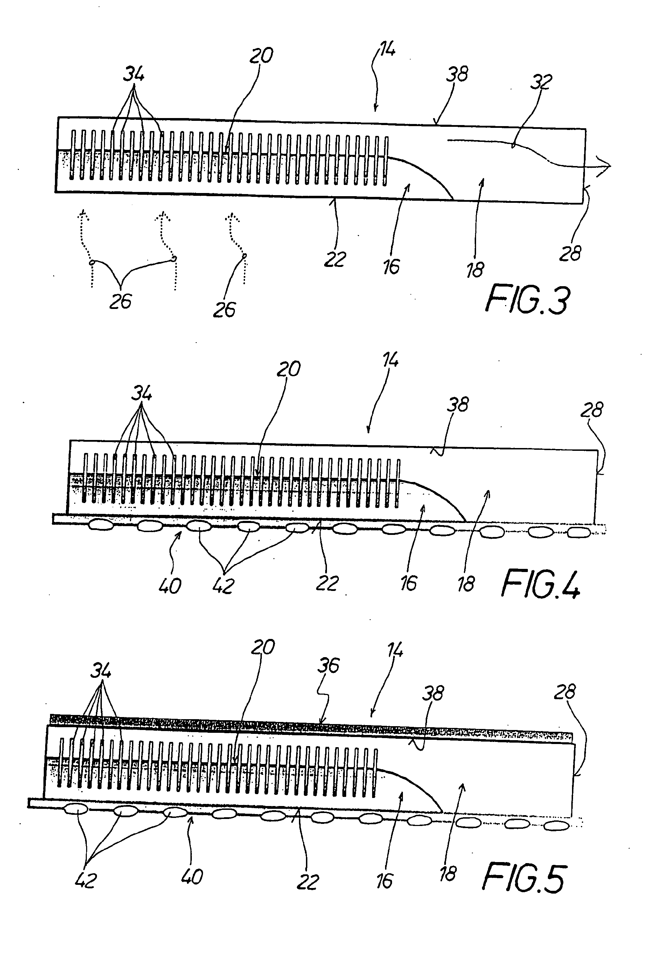

Der Lüftungskanal 14 weist - wie auch aus den Figuren 2 bis 5 ersichtlich ist - einen länglich rechteckigen Querschnitt auf. Die Wärmetauscher-Trennwand 20 ist zum Boden 22 und zur Oberseite des Lüftungskanales 14 parallel orientiert. Der Boden 22 des Lüftungskanales 14 ist mit Löchern 24 (siehe Fig. 2) ausgebildet, durch die verbrauchte warme Raumluft in den Abluftraum 16 eintritt bzw. eingesaugt wird. Das ist in den Figuren 2 und 3 durch die Pfeile 26 angedeutet.

Die eine Stirnseite bildende Längsschmalseite 28 des Lüftungskanales 14 ist mit Löchern 30 ausgebildet, durch welche erwärmte Zuluft in den zu belüftenden und zu erwärmenden Raum 12 austritt. Diese Zuluft ist in den Figuren 1 bis 3 durch die Pfeile 32 verdeutlicht.

Um zwischen dem Abluftraum 16 und dem davon getrennten Zuluftraum 18 des Lüftungskanales 14 einen optimalen Wärmeübergang zu gewährleisten, ist die Wärmetauscher-Trennwand 20 zur Oberflächenvergrößerung mit Längsrippen 34 versehen (siehe die Figuren 3, 4 und 5).

Fig. 5 verdeutlicht schematisch eine Schallisolation 36, die an der Oberseite 38 des Lüftungskanales 14 vorgesehen ist. Die Fig. 4 verdeutlicht eine Beleuchtungseinrichtung 40 mit einer Anzahl Lichtquellen 42, die an der Unterseite des Bodens 22 des Lüftungskanales 14 voneinander beabstandet vorgesehen sind. Unter Energieeinsparungs-Gesichtspunkten ist es zweckmäßig, wenn der Lüftungskanal 14 mit einer (nicht gezeichneten) Wärmeisolation versehen ist.

Der Lüftungskanal 14 der Lüftungseinrichtung 10 ist mit einem Lüftungsgerät 44 strömungstechnisch verbunden. Das Lüftungsgerät 44 weist einen Hochleistungs-Wärmetauscher 46 auf. Der Hochleistungs-Wärmetauscher 46 ist mit einer integrierten Regelung 48 des Lüftungsgerätes 44 wirkverbunden. Ein solches Lüftungsgerät 44 ist in der eingangs zitierten DE 102 49 562 A1 offenbart, die diesbezüglich zum Offenbarungsgehalt der vorliegenden Erfindung gehört.

Das Lüftungsgerät 44 ist mit dem Abluftraum 16 des Lüftungskanales 14 mittels eines ersten Anschlußkanales 50 strömungstechnisch verbunden. Der Zuluftraum 18 des Lüftungskanales 14 ist mit dem Lüftungsgerät 44 mittels eines zweiten Anschlußkanales 52 strömungstechnisch verbunden. Zur Erzeugung der entsprechenden Luftströmungen der warmen verbrauchten Raumluft 26 und der erwärmten frischen Zuluft 32 weist das Lüftungsgerät 44 Ventilatoren auf.

Der erste Anschlusskanal 50 mündet in den Boden 22 des Lüftungskanales 14 ein. Der zweite Anschlusskanal 52 mündet in die Wärmetauscher-Trennwand 20 des Lüftungskanales 14 ein.

Mit der Bezugsziffer 54 ist in Fig. 1 ein Vorheizregister des Lüftungsgerätes 44 bezeichnet, mit welchem es möglich ist, vor der Belegung des Raumes 12 mit Personen, d.h. vor dem Vorhandensein erwärmter Abluft, d.h. warmer Raumluft 26, den Raum 12 vorzuheizen.

Gleiche Einzelheiten sind in den Figuren 1 bis 5 jeweils mit denselben Bezugsziffern bezeichnet, so dass es sich erübrigt, in Verbindung mit allen Figuren alle Einzelheiten jeweils detailliert zu beschreiben.

### Bezugszeichenliste

- 10: Lüftungseinrichtung (für 12)
- 12: Gebäude-Raum
- 14: Lüftungskanal (von 10)
- 16: Abluftraum (von 14)
- 18: Zuluftraum (von 14)
- 20: Wärmetauscher-Trennwand (zwischen 16 und 18)
- 22: Boden (von 14)
- 24: Löcher (in 22 für 26)
- 26: Pfeil / warme Raumluft (von 12)
- 28: Stirn- / Längsschmalseite (von 14)
- 30: Löcher (in 28 für 32)
- 32: Pfeil / erwärmte Zuluft (für 12)
- 34: Längsrippen (von 20)
- 36: Schallisolation (an 14)
- 38: Oberseite (von 14)
- 40: Beleuchtungseinrichtung (an 14)
- 42: Lichtquellen (von 40)
- 44: Lüftungsgerät (von 10 für 14)
- 46: Hochleistungs-Wärmetauscher (von 44)
- 48: integrierte Regelung (von 44)
- 50: erster Anschlußkanal (zwischen 16 und 44)
- 52: zweiter Anschlußkanal (zwischen 18 und 44)
- 54: Vorheizregister (von 44 für 32)

## Patentansprüche

1. Lüftungseinrichtung, insbesondere für Räume öffentlicher Gebäude, wie Klassenzimmer, Kindergärten, Büros oder dergleichen
**gekennzeichnet durch**
einen Lüftungskanal (14), der einen Abluftraum (16) für verbrauchte, vorzugsweise warme Raumluft (26) und einen Zuluftraum (18) für frische, vorzugsweise zu erwärmende Zuluft aufweist,
wobei vorgesehen ist:
a) dass der Abluftraum (16) zum Zuluftraum (18) **durch** eine Wärmetauscher-Trennwand (20) getrennt ist, und/oder
b) dass zumindest eine Außenwand des Lüftungskanals (14) zumindest abschnittsweise aus Nichtmetall-Material ausgebildet ist, und/oder
c) dass der Lüftungskanal an der Unterseite einen doppelten Boden aufweist zur Verlegung von Leitungen, und/oder
d) dass der Lüftungskanal eine abnehmbare oder öffenbare Außenwand zu Reinigungszwecken des Innenraums des Lüftungskanals (14) aufweist.

2. Lüftungseinrichtung nach Anspruch 1,
**dadurch gekennzeichnet,**
**dass** der Lüftungskanal (14) einen länglichen oder quadratischen oder kreisförmigen Querschnitt besitzt, und dass die Wärmetauscher-Trennwand (20), zum Boden (22) und zur Oberseite (38) des Lüftungskanales (14) parallel orientiert, den Querschnitt des Lüftungskanales (14) in den Abluftraum (16) und den Zuluftraum (18) unterteilt.

3. Lüftungseinrichtung nach Anspruch 1 oder 2,
**dadurch gekennzeichnet,**
**dass** der Lüftungskanal (14) an seinem Boden (22) mit Löchern (24) für die verbrauchte, warme Raumluft (26) und an einer Längsschmalseite (28) mit Löchern (30) für die erwärmte Zuluft (32) ausgebildet ist.

4. Lüftungseinrichtung nach einem der Ansprüche 1 bis 3,
**dadurch gekennzeichnet,**
**dass** der Lüftungskanal (14) mit einer Wärmeisolation versehen ist.

5. Lüftungseinrichtung nach einem der Ansprüche 1 bis 4,
**dadurch gekennzeichnet,**
**dass** der Lüftungskanal (14) mit einer Schallisolation (36) versehen ist.

6. Lüftungseinrichtung nach einem der Ansprüche 1 bis 5,
**dadurch gekennzeichnet,**
**dass** der Lüftungskanal (14) mit einer Beleuchtungseinrichtung (40) versehen ist.

7. Lüftungseinrichtung nach einem der Ansprüche 1 bis 6,
**dadurch gekennzeichnet,**
**dass** der Lüftungskanal (14) mit einem Lüftungsgerät (44) strömungstechnisch verbindbar oder verbunden ist, das einen Hochleistungs-Wärmetauscher (46) aufweist.

8. Lüftungseinrichtung nach Anspruch 7,
**dadurch gekennzeichnet,**
**dass** das Lüftungsgerät (44) ein Vorheizregister (54) aufweist.

9. Lüftungseinrichtung nach einem der vorangehenden Ansprüche,
**dadurch gekennzeichnet,**
**dass** die Wärmetauscher-Trennwand aus einem Metall-Material und/oder aus einem Kunststoff-Material ausgebildet ist.

10. Lüftungseinrichtung nach Anspruch 9,
**dadurch gekennzeichnet,**
**dass** die Wärmetauscher-Trennwand aus einem Silizium-Aluminium-Legierung oder einem Metall-Material vergleichbare Wärmeleitfähigkeit ausgebildet ist oder dass die Wärmetauscher-Trennwand (20) aus einem Polycarbonat oder aus einem Kunststoff-Material vergleichbarer Wärmeleitfähigkeit ausgebildet ist.

11. Lüftungseinrichtung nach einem der vorangehenden Ansprüche,
**dadurch gekennzeichnet,**
**dass** die Wärmetauscher-Trennwand so ausgebildet ist, dass eine thermische Wärmebereitstellung von mindestens 90 % gegeben ist.

12. Lüftungseinrichtung nach einem der vorangehenden Ansprüche, **dadurch gekennzeichnet**,
die Wärmetauscher-Trennwand (20) eine gerippte Struktur aufweist.

13. Lüftungseinrichtung nach einem der vorangehenden Ansprüche, **dadurch gekennzeichnet,**
**daß** die abnehmbare Außenwand des Lüftungskanals als Metallelement, z.B. metallische Schürze ausgebildet ist, welches magnetisch an einen Teil des Lüftungskanals lösbar befestigt ist.

14. Lüftungse9inrichtung nach Anspruch 13,
**dadurch gekennzeichnet,**
**daß** die magnetische Befestigung des Metallelements, z. B. der metallischen Schürze über eine an dem Lüftungskanal angebrachte Permanentmagneteinrichtung erfolgt.

15. Lüftungseinrichtung nach einem der vorangehenden Ansprüche, **dadurch gekennzeichnet**
**daß** der Lüftungskanal als Energielüftungskanal ausgebildet ist, in dem mindestens ein Luftstrom geführt ist und dabei Wärme transportiert wird und/oder Wärme zwischen mehreren in dem Lüftungskanal geführten Luftströmen ausgetauscht wird und/oder Energieversorgungsleitungen für elektrischen Strom und/oder Heizmedium und/oder Kühlmedium und/oder hydraulisches Medium und/oder pneumatisches Medium angeordnet sind.
